# EUROPEAN PATENT SPECIFICATION

(11) **EP 0 912 820 B1**
(45) Date of publication and mention of the grant of the patent: **27.08.2003**
(21) Application number: 97932439.9
(22) Date of filing: 30.06.1997
(51) Int. Cl.: F01N 3/28

(54) **CATALYST MEMBER MOUNTING MEANS**
MONTAGEVORRICHTUNG FÜR KATALYSATOR
DISPOSITIF DE MONTAGE POUR ELEMENT CATALYSEUR

(30) Priority: 17.07.1996 US 682247
(43) Date of publication of application: 06.05.1999
(73) Proprietor: Engelhard Corporation, Iselin, NJ 08830-0770 (US)
(72) Inventor: HWANG, H., Shinn, Livingston, NJ 07039 (US); MOONEY, John, J., Wyckoff, NJ 07481 (US); BROWN, Ronald, J., Edison, NJ 08871 (US)
(74) Representative: Fisher, Adrian John
(86) International application number: US9711513
(87) International publication number: WO98002649

(56) References cited:
- EP-A- 0 603 754
- EP-A- 0 643 204
- WO-A-94/24425
- DE-A- 3 012 182
- US-A- 4 693 338
- US-A- 4 698 213
- US-A- 4 698 213

## Description

### Field of the Invention

The present invention relates to the mounting of catalyst members in canisters.

The exhaust gases of internal combustion engines, including small engines, are known to contain pollutants such as hydrocarbons, carbon monoxide and nitrogen oxides (NOₓ) that foul the air. Governmental restrictions on such emissions from larger engines, such as those for automobiles, require that they be equipped with fuel control devices designed to keep the air/fuel mixture used in the engine in stoichiometric balance, so that substantially complete combustion and catalytic treatment of the fuel can yield carbon dioxide without substantial formation of NO_{X}. Automobiles are typically also equipped with flow-through underfloor catalyst members, commonly known as catalytic converters, that comprise environmental catalysts that convert unburned hydrocarbons, carbon monoxide and NOₓ to innocuous substances, e.g., carbon dioxide, nitrogen and water vapor. The fuel control devices help optimize the conversion performance of catalytic converters by keeping the air/fuel combustion mixture for the engine in stoichiometric balance. Even though the activity of the environmental catalyst is generally exothermic, exhaust gases are not ignited even when heated by the exothermic action of a single environmental catalyst because the exhaust gas produced by an engine running on a stoichiometric air/fuel mixture has an auto-ignition temperature that is higher than that reached by the catalyst.

Small internal combustion engines, usually two-stroke and four-stroke spark ignition engines, e.g., gasoline-engine powered lawn mowers, motor scooters, motorcycles, mopeds and the like, provide a severe environment for a catalytic exhaust treatment apparatus. This is because small engines typically power machines that are not large enough to accommodate a length of exhaust pipe between the engine and the catalytic treatment apparatus sufficient to cool the exhaust before it contacts the catalyst. In addition, the exhaust gas contains a high concentration of unburned fuel and unconsumed oxygen which release large quantities of heat when they react over the catalyst. The heat conditions are often severe because a catalyst member is often mounted inside another structure such as a muffler, or it may be insulated to protect the user; in either case, the heat it produces cannot quickly be dissipated.

Furthermore, the vibrational force in a two-stroke engine can be three or four times that of a four-stroke engine. For example, vibrational accelerations of 70 G to 90 G (G = gravitational acceleration) at 150 hertz (Hz) have been reported for small engines. The harsh vibration and exhaust gas temperature conditions associated with small engines lead to several modes of failure in the exhaust gas catalytic treatment apparatus, including failure of the mounting structure by which a catalyst member is secured in the apparatus and consequential damage or destruction of the catalyst member due to the mechanical vibration and to flow fluctuation of the exhaust gas under high temperature conditions. The catalyst member usually comprises a ceramic-like carrier member that has a plurality of fine parallel gas flow passages extending therethrough (sometimes referred to as a "honeycomb") and which is typically made of, e.g., cordierite, mullite, etc., on which a catalytic material is coated. A typical carrier member has cells spaced 2.54 millimeters ("mm") apart (100 cpsi) and walls 0.3 mm thick. The ceramic-like material is subject to cracking and pulverization by excessive vibration. The catalyst member is typically mounted in a canister by wrapping the catalyst member with a resilient mat and enclosing the canister about the wrapped catalyst member. The mat resides in a gap between the canister and the catalyst member. The canister is configured so that it is easily mounted in the exhaust line of the vehicle.

### Related Art

In SAE technical paper number 922252 entitled New Developments In Packaging of Ceramic Honeycomb Catalysts, dated October 19-22, 1992, Gulati et al discuss the mounting of ceramic honeycomb catalysts in canisters to be emplaced in the exhaust lines of diesel and gasoline trucks. They teach a preference for gap bulk density (GBD) of a ceramic mat used to mount a honeycomb catalyst in a canister as being from 0.78 to 1.2 grams per cubic centimeter ("g/cm³"), referring to the density of the ceramic fiber fabric when it is compressed between the canister shell and the catalyst member therein, and a corresponding mean mounting pressure of from 0.67 to 23 kg/cm². For temperatures above 700°C, a ceramic material sold commercially under the trademark FIBERMAX-LS™ by Carborundum Company is suggested. A hybrid mat, in which an inner layer of highly insulating FIBERFRAX™ material is placed next to an intumescent XPE-FF material, is disclosed for use in the heavy-duty gasoline truck engine catalytic converter, where the inlet gas temperature may approach 1100°C and monolith skin temperature may exceed 900°C.

EP-A-0603754 and US-A-4698213 both disclose the use of ceramic fibers for securing a catalyst in a housing.

Product literature for a prior art ceramic fiber fabric material used to mount catalyst members states that the fabric comprises fiber having a length of up to approximately 254 millimeters (10 inches). A similar disclosure is found in WO94/24425.

U.S. Patent 3,795,524 to Sowman, dated March 5, 1974, discloses a ceramic fiber fabric whose fibers are continuous and comprise alumina, from 5 percent to 25 percent boria, and from 0 to 65 percent silica, but the material is not taught for use as a mounting mat for a catalyst member.

### SUMMARY OF THE INVENTION

The present invention relates to improvements in an exhaust treatment apparatus for abating noxious components of the exhaust gas of a small internal combustion engine.

The exhaust treatment apparatus of the present invention, as defined in claim 1 comprises a catalyst member secured in a canister through which the exhaust gas flows, the catalyst member comprising a catalytic material effective for the conversion of at least some of the noxious components to innocuous substances. A ceramic fiber fabric is disposed in a gap between the catalyst member and the canister for mounting the catalyst member in the canister. One improvement comprises that the ceramic fiber fabric has a density of greater than 0.089 grams per cubic centimeter ("grams per cc"). For example, the ceramic fiber fabric may have a density of at least about 0.1 grams per cc, or at least about 0.5 grams per cc, or even at least about 0.74 grams per cc. The fabric comprises fibers having an average length greater than 25.4 cm (10 inches), e.g., an average length of at least about 1.5 meters, preferably at least about 3 meters. The fabric may be configured to have a width that is not greater than the length of the catalyst member, and preferably may have woven edges. The fabric may be woven from yarn comprising effectively continuous ceramic fibers.

preferably, the ceramic fiber fabric may be substantially free of intumescent fibers. The ceramic fiber fabric may have a gap bulk density, meaning the density of the ceramic fiber fabric when it is compressed in the gap between a canister shell and a catalyst member therein, of at least about 0.8 g/cm³.

According to another aspect of the invention, the gap may have a width of less than about 2.5 mm (0.1 inch). For example, the gap may have a width of from about 1.3 to 1.5 mm (0.05 to 0.06 inch). Optionally, the gap may be less than 1.3 mm (0.05 inch).

According to yet another aspect of the invention, the catalyst member may have an inlet end face, an outlet end face and a circumferential surface, and the ceramic fiber may be confined to the circumferential surface. Optionally, the apparatus may comprise end rings dimensioned and configured to confine the fabric to the circumferential surface without obstructing the end faces of the catalyst member.

In a particular embodiment, the ceramic fiber fabric may have a weight of about 1550 grams per square meter (1 gram per square inch).

The present invention also relates to a method for assembling a gas treatment apparatus according to claim 19. The method comprises wrapping a catalyst member in a ceramic fiber fabric, the catalyst member comprising a catalytic material effective for the conversion of components of a gas stream and being dimensioned and configured to have two end faces, a circumferential surface, and a plurality of gas flow passages extending therethrough from one end face to the other. The wrapped catalyst member is surrounded with at least one shell having edges that can be joined together. An assembly force is applied on the at least one shell and is maintained while securing the shell edges together to form a canister about the catalyst member and to define a gap between the canister and the catalyst member wherein the ceramic fiber fabric is disposed.

According to one aspect of the invention, the gas flow passages of the catalyst member may be defined by sets of parallel cell walls that may be angled relative to each other, and the method may comprise applying the assembly forces at a non-zero angle relative to each set of cell walls. For example, the sets of cell walls may be perpendicular to each other, and the assembly forces may be applied at an oblique angle relative to the cell walls, e.g., at an angle of 45 degrees.

In a particular embodiment, the method may comprise confining the ceramic fiber fabric to the circumferential surface of the catalyst member.

### BRIEF DESCRIPTION OF THE DRAWINGS

Figure 1A shows plots of compression and relaxation thicknesses for aged and non-aged woven fabric used in one aspect of the present invention;
Figure 1B shows plots like those of Figure 1A for a felt-type fabric of the prior art;
Figure 2 is a cross-sectional view of a racetrack-shaped catalyst member mounted in a clamshell canister in accordance with one embodiment of the present invention;
Figure 3A is a schematic view of an apparatus for assembling a shell-and-catalyst member assembly;
Figure 3B is a cross-sectional view of a round catalyst member oriented in canister shells with assembly forces applied at a 45 degree angle relative to the cell walls in the catalyst member;
Figure 4 is a schematic cross-sectional view of a staged catalytic flame arrestor in accordance with one embodiment of the present invention, comprising two catalyst members mounted in the engine muffler with ceramic fiber fabrics in accordance with one embodiment of the present invention;
Figure 4A is an enlarged view of that portion of Figure 4 indicated by the circle A in Figure 4; and
Figure 5 is a cross-sectional view of a fabric-mounted catalyst member with a fabric that does not extend to the ends of the catalyst member and with end rings that confine the fabric but do not obstruct the end faces of the catalyst member.

### DETAILED DESCRIPTION OF THE INVENTION AND PREFERRED EMBODIMENTS THEREOF

Exhaust treatment apparatus typically comprises:
a catalyst member comprising a ceramic flow-through carrier bearing a thin washcoat of catalytic material. Such catalyst members may be mounted in metal canisters through which the exhaust gas is flowed by wrapping the catalyst members in a swatch of ceramic fiber fabric and securing the wrapped catalyst member within a flow-through canister. The canister is then attached, usually by welding, to the exhaust pipe of the engine. Some prior art ceramic fiber fabrics used for this purpose are intumescent, so that as the temperature of the exhaust gas treatment apparatus rises and the canister expands, the mat expands as well to maintain the "grip" exerted on the catalyst member by the canister. However, intumescent fabrics usually lose their intumescence at temperatures above about 700°C, which are routinely reached by exhaust gases entering a treatment apparatus installed inside a muffler for a small engine. Further, to stabilize the catalyst member against the severe vibrations, the canister is usually designed to tightly compress the fabric around the catalyst member, i.e., to impose a high mounting pressure on the fabric and on the catalyst member, which can crush the fabric and thus cause the mounting to fail.

Prior art ceramic fiber fabrics have not exhibited sufficient durability to permit the mounting of flow-through catalyst members in the mufflers of small engines such as are found in lawn mowers. As indicated above, conditions in the mufflers of these devices are severe and include high temperatures, e.g., temperatures in excess of 700°C, as well as high mounting pressures which are required to securely mount the catalyst member against slippage caused by vibrations which may impose acceleration forces of 50 G's or more on the catalyst member. One commercially available prior art ceramic fiber fabric partly disintegrated when subjected to a mounting pressure exceeding 2.1 kilograms per square centimeter ("kg/cm²"). That is, a significant proportion of the fibers were crushed by the imposed mounting pressure. Other prior art fabrics exhibit unacceptable erosion under conditions of use. In the prior art, the ceramic fiber fabrics used to mount catalyst members are non-woven, felt-type fabric.

One aspect of the present invention arises from the discovery that a particular type of non-intumescent ceramic fiber fabric that is sold commercially under the trade designation NEXTEL™ as insulation material for furnaces can be used as a mounting mat for a catalyst member disposed in a muffler for a small engine, with superior results relative to other fabrics used for this purpose. The use of such a ceramic fiber fabric in accordance with the present invention yields the advantages of providing a mounting fabric that is stable at temperatures well in excess of 700°C and that can withstand the compression forces required to secure a catalyst member in a canister despite vigorous vibrations and exhaust flow fluctuations. Without wishing to be bound by any particular theory, it is believed that the NEXTEL™ fabrics, which are described below, provide superior performance because they are more dense than fabrics previously used as mounting mats. When a low-density fabric is compressed in a canister about a catalyst member, the fabric bulges from the gap between the canister and the catalyst member and fibers tend to shed from the fabric. In addition, as discussed more fully below, compression of such a fabric by a canister crushes the fibers, causing felt-type fabrics to fail as mounting mats. In contrast, fabrics in accordance with the present invention have densities greater than 0.089 grams per cc (1.46 gram per cubic inch ("per in³")). One way that this can be achieved is to impose an order on the arrangement of fibers in the fabric, e.g., by spinning the fibers into yarn and forming the fabric from the yarn by weaving, knitting, etc., instead of creating a felt material as in the prior art. As used herein and in the claims, the term "woven fabric" is meant to broadly encompass fabrics having regularly interlaced fibers or yarn strands, whether knitted, braided, woven by warp and weft, etc. Such fibers may have densities of at least 0.1 grams per cc (1.6 grams per in³), or of at least about 0.5 grams per cc (8.2 grams per in³). For example, the density of the fabric may be about 0.76 grams per cc (12.45 grams per in³). In contrast, a typical 1.27 cm (0.5 inch) thick felt-type fabric has a density of only 0.024 grams per cc (0.38 grams per in³), and a "high density" felt-type fabric has a density of only 0.089 grams per cc (1.46 grams per in³). Only one prior art fabric has a high density, i.e., a density of about 0.6 grams per cc, but this is an intumescent material and the high density is attributable to the intumescent mineral therein. To the knowledge of the inventors, no non-intumescent ceramic fiber fabrics having densities greater than 0.089 grams per cc have been used as mounting mats as taught herein.

A ceramic fiber fabric of the present invention preferably comprises fibers having an average length that is longer than that of fibers in prior art materials used as mounting mats for catalyst members. Fabrics used in accordance with the present invention comprise fibers have an average length of greater than 25.4 cm (10 inches), e.g., at least about 1.5 meters (about 5 feet), preferably at least about 3 meters (about 10 feet). Most preferably, the fabric comprises yarn spun from effectively continuous fibers, i.e., fibers that extend for substantially the entire length of the yarn in the fabric. Prior art materials, in contrast, generally principally comprise fibers whose average length is less than 25.4 cm (ten inches), in some cases, only 2.5 to 5.0 cm (one or two inches). The fibers of materials of the present invention typically have a diameter of at least about 5 microns, and the diameter may be greater than 20 microns. Generally, the fibers should have a diameter in the range of about 5 to 15 microns, i.e., about 10 microns, although it is not crucial that the fiber diameter fall in this range. The fibers principally comprise alumina and silica, with a relatively minor proportion of boria. The boria may constitute from about 0.5 to 10 percent of the fiber weight. The fibers are typically spun into yarn strands containing roughly from 500 to 3000 fibers per strand. Typically, the yarn has 700-800 fibers per strand yielding yarn strands that typically have a diameter of 0.25 - 1.78 mm (0.01-0.07 inch) in diameter.

Preferably, the fabric used for the present invention is knitted or woven in a warp-and-weft pattern to yield a material that exhibits a resiliency in response to a compressive force even during exposure to temperatures as high as 1050°C. Such resilience under high compressive force is not seen in prior art felted fabrics. In a preferred embodiment, each swatch of fabric is woven to a width sized to match the length of the catalyst member. The edges of the fabric that are disposed at the ends of the catalyst member will therefore not expose cut, frayed yarn ends that would make the fabric vulnerable to degradation. Whereas prior art fabrics must occupy an annular gap of about 2.5 to 6.35 mm (0.1 to 0.25 inch) between the catalyst member and the canister to attain a suitable degree of resiliency, fabrics according to the present invention can occupy a gap of less than 2.5 mm (0.1 inch), e.g., the gap may be about 1.27 to 1.78 mm (0.05 to 0.07 inch) or less. Fabrics used in accordance with the present invention thus allow a given catalyst member to be mounted in a smaller canister than conventional fabrics. Conversely, since catalyst members are sometimes mounted inside other pre-existing structures such as mufflers, the fabrics of the present invention will permit the mounting in such structures of larger catalyst members than will conventional fabrics, thereby yielding increased catalytic activity.

The Minnesota Mining and Manufacturing Company ("3M") makes two fabrics under the trade designations NEXTEL™ 440 and NEXTEL™ 312 that are suitable for use in the present invention. These fabrics are woven from continuous fibers having an average diameter of about 10 to 12 microns. MEXTEL™ 440 comprises about 70% alumina, 28% silica and about 2% boria by weight. NEXTEL™ 312 comprises about 62% alumina, 24% silica and 14% boria. These fabrics range in weight from 237 to 1085 g/m² (7 to 32 ounces per square yard) and in weave from 32 x 21 to 40 x 20. Preferred fabrics used in double layers have weaves of 40 x 20 and a weight of 1000 g/m² (29.5 ounces per square yard) (commercial designation AF-62) and 32 ounces per square yard (commercial designation BF-54). A single layer NEXTEL™-type fabric woven to 1550 g/m² (1 gram per square inch) (about 45.7 ounces per square yard) has also been useful in the present invention.

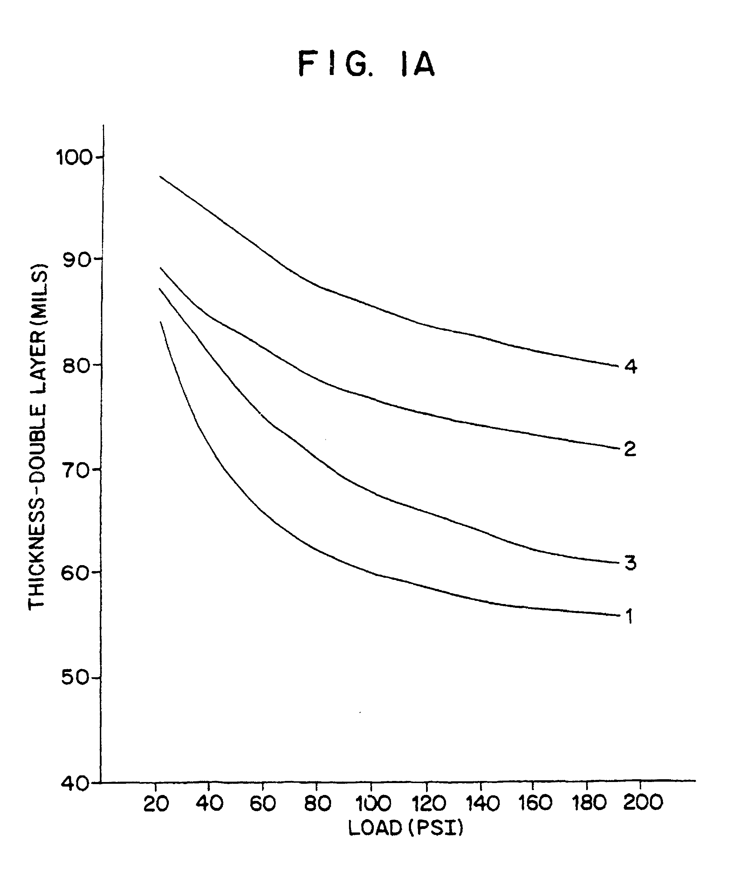

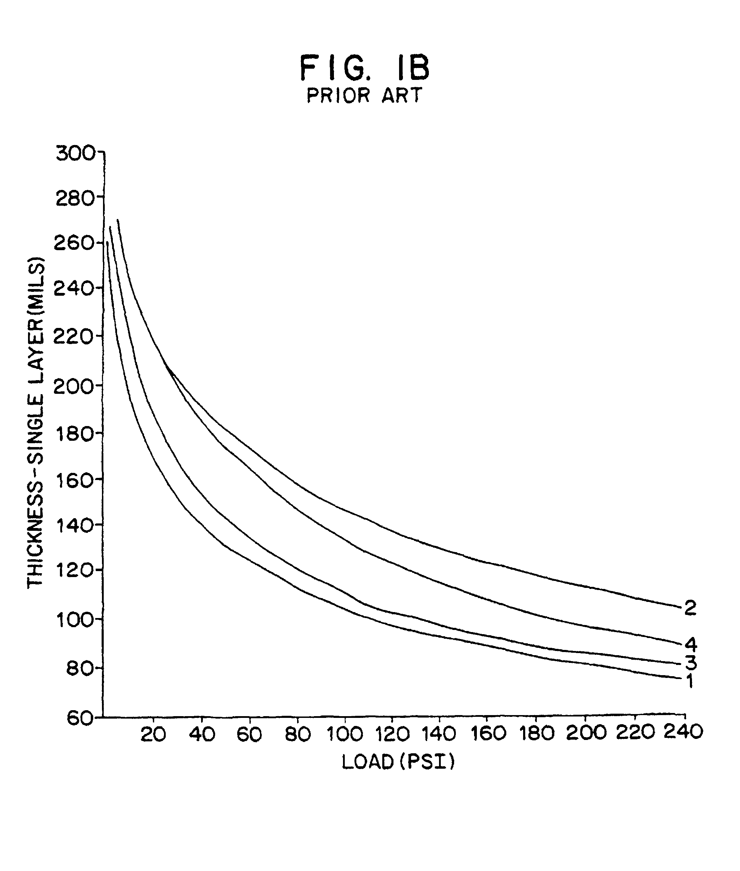

The superior suitability of woven fabrics as mounting materials is seen by subjecting a double layer of such material to pressure, noting the thickness of the material under such compression and then observing the thickness recovered when the pressure is released. A graph illustrating these compressions and relaxations for an aged and non-aged material sample of a double layer of NEXTEL™ 440 woven ceramic fiber fabric for use in the present invention is shown in Figure 1A. In Figure 1A, curve #3 plots the compression thicknesses of a non-aged woven sample of a NEXTEL™ 440 fabric and curve #4 shows the relaxation thickness of the fabric when the compression force is released. The compression force was raised incrementally between tests so the plot is read from left to right. Curves #1 and #2 likewise show compression and relaxation thicknesses over the same pressure range as for curves #3, #4 for a sample of material that was aged at 1000°C for 48 hours before testing. In such tests performed using pressures that were increased incrementally over a range from about 138 to 1379 kPa (20 to about 200 pounds per square inch), the non-aged woven fabric compressed under pressure to a thickness that decreased from about 2.13 mm (0.084 inch) to about 1.40 mm (0.055 inch) as the compression force was increased, and relaxed to thicknesses ranging from 2.23 mm (0.088 inch) to about 1.80 mm (0.071 inch), respectively. In other words, the compression/relaxation thickness differential of the non-aged woven fabric ranged from about 0.10 mm (0.004 inch) at about 138 kPa (20 psi) to about 0.40 mm (0.016 inch) at about 1.30 MPa (190 psi). Woven fabric that was aged by exposure to calcination at 1000°C for 48 hours relaxed from about 2.2 mm (0.087 inch) thickness at about 138 kPa (20 psi) to 2.49 mm (0.098 inch), and it relaxed from about 1.52 mm (0.060 inch) thickness at about 1.3 MPa (190 psi) to a relaxation thickness of about 2.0 mm (0.079 inch). In other words, the compression/relaxation thickness differential of the aged woven fabric ranged from about 0.011 at 138 kPa (20 psi) to about 0.019 at 1.3 MPa (190 psi), which generally coincides with the range of differentials of the non-aged sample. Correspondingly, the differential gap width for a racetrack-shaped cordierite-based catalyst member measuring about 4.6 cm (1.8 inch) X 2.8 cm (1.1 inch) in a 316 stainless steel canister over a 1832°F (1017°C) temperature change is about 0.41 mm (0.016 inch) along the major axis and about 0.25 mm (0.01 inch) along the minor axis. The thickness differential for the double layer of woven fabric, whether aged or not, corresponds roughly over a wide pressure range to the changes in the gap between such a catalyst member and canister that occur as a result of thermal expansion of the canister. Accordingly, in a suitably configured catalyst member-and-canister assembly, the fabrics used for this invention can be placed under high compression at ambient temperature and can maintain a suitable gripping force even when the canister expands thermally because the fabric exhibits resiliency.

In Figure 1B, curves #1 and #2 plot the compression and relaxation thickness data for a single layer of a non-aged felt-type fabric of the prior art, and curves #3 and #4 plot like data of an aged sample. The compression/relaxation thickness differential of the felt non-aged sample ranged from about 1.22 mm (0.048 inch) at 138 kPa (20 psi) to about 0.86 mm (0.034 inch) at 1.3 MPa (190 psi), with compressed thicknesses of about 4.3 mm (0.170 inch) at 138 kPa (20 psi) and 2.1 mm (0.082 inch) at 1.3 MPa (190 psi). It is clear from Figure 1B that the felt-type fabric loses its resiliency after aging, since the compressed and relaxed thicknesses of the aged sample fall within a more narrow range than corresponding thicknesses of the non-aged sample and the compression/relaxation thickness differential ranges from only about 0.81 (0.032 inch) at about 241 kPa (35 psi) to about 0.30 mm (0.012 inch) at about 1.3 MPa (190 psi). A comparison of Figure 1A to Figure 1B illustrates that a woven fabric is better able to maintain its resiliency after aging than a felt fabric. Without wishing to be bound by any particular theory, it is believed that the superior resiliency retention of a woven fabric contributes to the superior performance such fabrics exhibit as mounting media for catalyst members in accordance with this invention.

Ceramic fiber fabrics used in accordance with the present invention can withstand continuous exposure to temperatures over 1200°C while resisting disintegration and maintaining resiliency while under compression about a catalyst member in a canister.

The fabrics used in accordance with the present invention serve to mount the catalyst member in canisters in any suitable manner. Typically, the catalyst member is wrapped in one or more layers of the fabric and the wrapped catalyst member is deposited into a metallic clamshell-type canister. Sometimes, a strip of fabric having a width corresponding to the length of the catalyst member is cut from a wider swatch of material. The cut strip is then wrapped around the catalyst member. In such case, however, the cut edge of the fabric has loose fibers that are exposed at the ends of the catalyst member. The fabric can become frayed and can be a site of failure for the mounting. It is therefore preferred that the fabric have woven edges and that it be sized so that its width corresponds to the length of the catalyst member. In this way, the fabric can be wrapped around the catalyst member without any need to cut the fabric and there will be no exposed frayed edges. The fabric may also be folded for wrapping about the catalyst member, and the fold seam may be placed at an end of the catalyst member to provide a woven edge.

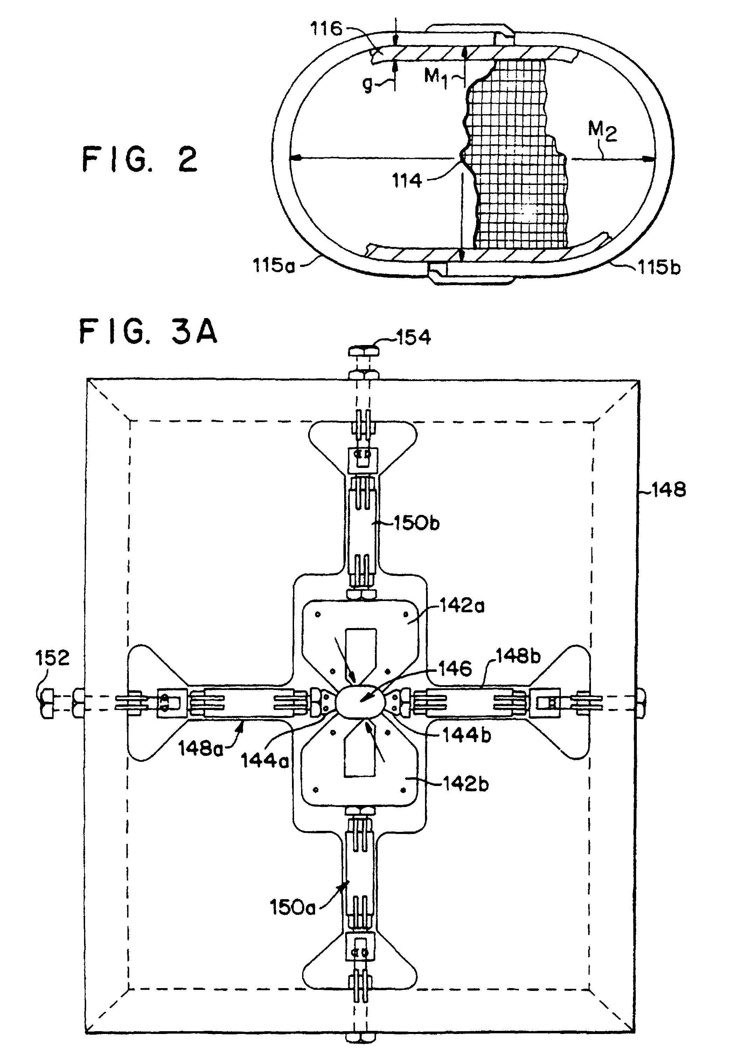

The canister is preferably made from metal having a low coefficient of thermal expansion, thus 409 or 430 stainless steel is preferred over 300 series stainless steel. The canister is closed around the wrapped catalyst member under suitable pressure and is sealed, usually by welding. The interior surface of the canister, which bears on the ceramic fiber fabric, may either be smooth or roughened, e.g., by sand blasting. In a typical embodiment, a double layer of a 1550 g/m² (1 gram per square inch) NEXTEL™ 440 fabric is wrapped around a racetrack-shaped catalyst member (i.e., one shaped to have two parallel straight sides joined by two rounded sides) measuring 4.32 centimeters ("cm") along its major axis and 2.79 cm x 2.54 cm along the minor axis. The wrapped catalyst member is placed in a clamshell canister which is welded closed to impose a pressure on the fabric that may exceed 2.1 kg/cm². Typically, the canister comprises two shells that surround the rounded sides of the catalyst member and that overlap as shown in Figure 2. During assembly, the shells 115a, 115b are placed about the catalyst member 114 and the surrounding ceramic fiber fabric 116 so that the shells overlap along the minor axis M₁ of the catalyst member. (M₁ is seen as a line in a cross section of the catalyst member, but it comprises a plane that bisects the catalyst member along its length, as does M₂.) The shell-catalyst member assembly is placed in a vise assembly that applies pressure on the shells while the shells are being welded together. In the finished assembly, the fabric 116 is compressed in gap g to a thickness corresponding to the width of the gap.

In alternative embodiments, the canister shells may overlap along major axis M₁, or the canister may be formed from a single shell that encircles the wrapped catalyst member and that has edges that overlap and that can be welded together.

One embodiment of a vise assembly for canning a catalyst member is shown in Figure 3A, where the shell-catalyst member assembly is disposed between minor axis vise shoes 142a, 142b and major axis vise shoes 144a, 144b. Minor axis vise shoes 142a, 142b are dimensioned and configured to engage the exterior of the canister shells of shell-catalyst member assembly 146 along the sides of shell-catalyst member assembly 146 while leaving exposed the seam where the shells overlap so that they can be welded together while pressure is being applied. The vise shoes and shell-catalyst member assembly are suspended in a frame 148 by load cells 148a, 148b and 150a, 150b that apply and measure forces imposed on the vise shoes. The forces, which may differ along the major and minor axes of the catalyst member, can be adjusted by turning one or both of screws 152, 154. In alternative embodiments, the forces imposed on shoes 142a, 142b and 144a, 144b can be controlled by hydraulic or pneumatic or other conventional pressure devices. In use, the catalyst member is wrapped with the ceramic fiber fabric and one or more canister shells, the catalyst member and shell assembly is placed in the vise shoes and a predetermined force is applied to impose a predetermined compression force on the ceramic fiber fabric. The shell or shells are then welded or otherwise secured together. This procedure differs from the prior art in which the assembly force was applied as necessary to achieve a precise configuration of the canister shells prior to welding. In the prior art procedure, the applied assembly force varied to accommodate variations in the physical dimensions of the components of the assembly; as a result, the compression force on the mounting mat could vary from one assembly to the next, causing significant variations in the performance of the finished products. By controlling the force applied during assembly in accordance with the present invention, a predetermined compression force to be imposed on the ceramic fiber fabric (and thus on the catalyst member) can be achieved consistently despite variances in the dimensions of the canister shells, catalyst member or fabric thickness. For example, ceramic substrate tolerances for catalyst members for automobiles can range from about ± 0.89 to ± 1.65 mm (± 0.035 to ± 0.065 inch). The use of canister shells that have overlapping edges (as seen in Figure 2) to be welded together facilitates control of the assembly force because the degree to which shell edges overlap is not critical to the formation of a satisfactory weld. Therefore, variances in the degree of overlap that are required to permit the use of a predetermined compression force despite variations in the dimensions of the shells, catalyst member, etc., are easily accommodated. The predetermined assembly forces may be in the range of about 45.4 to 522 kg (100 to 1150 pounds), more typically from about 90.7 to 227 kg (200 to 500 pounds). The assembly force is selected to attain a desired compression force on the ceramic fiber mat. For a canister holding a catalyst member for a two-stroke, high-vibration engine, the compression force is typically in the range of about 552 kPa to about 827 kPa (about 80 to about 120 pounds per square inch (psi)), e.g., from about 620 kPa to 689 kPa (90 to 100 psi). The compression force may be higher but must not exceed the isostatic strength of the catalyst member. In devices for four-stroke engines, the compression force may be less than 552 kPa (80 psi), e.g., it may be as low as about 207 kPa (30 psi). Preferably, frame 148 is pivotably mounted on a base so that it can be rotated to allow the welder to position one canister seam and then the other for convenient welding.

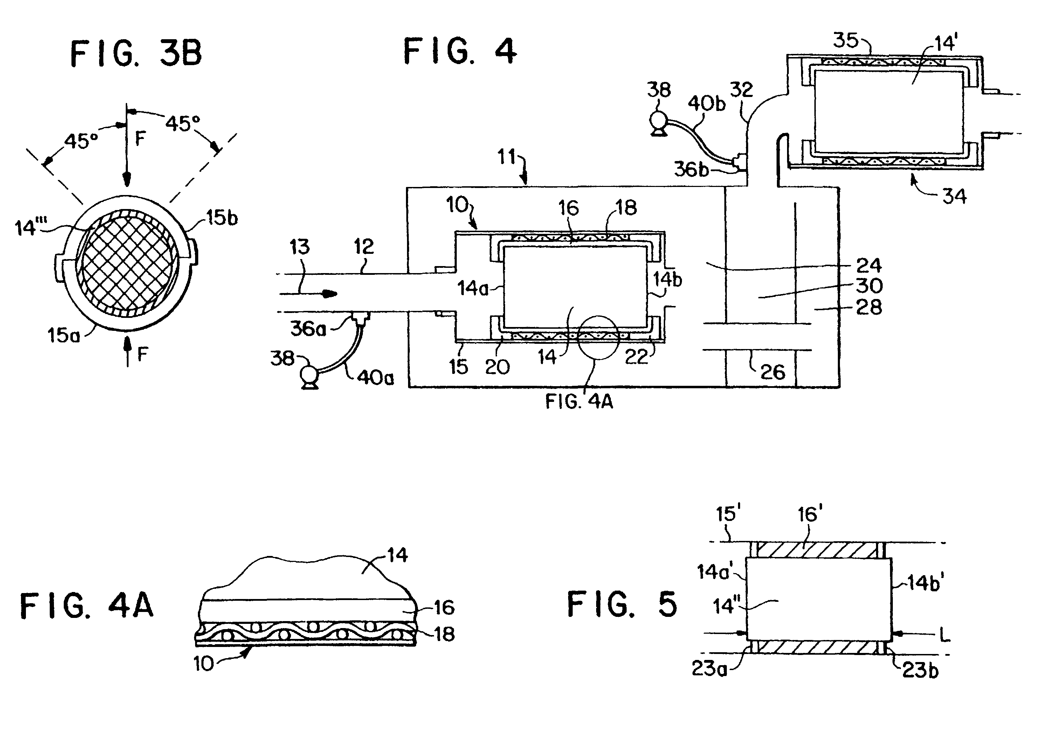

As seen in Figures 2 and 3B, the gas flow passages of a catalyst member may be defined by sets of parallel cell walls that are angled relative to one another. Preferably, assembly forces are applied at a non-zero angle relative to each set of parallel cell walls. When, as seen in Figures 2 and 3B, the sets of cell walls are mutually orthogonal to each other, i.e., when one set of walls extends vertically and another set extends horizontally, the assembly forces are imposed at oblique angles relative to the cell walls. As seen in Figure 3B, forces F are applied on shells 15a, 15b at a 45 degree angle relative to both sets of cell walls of catalyst member 14"'.

Another assembly technique that can be used is a stuffing technique in which the catalyst member is wrapped with the ceramic fiber fabric and is pushed through a cone from the large end of the cone. The small end of the cone is dimensioned to correspond to the inside diameter of the canister and is situated at the canister opening. As the catalyst member is pushed through the cone, the cone compresses the fabric so that it can fit into the canister so the catalyst member and fabric slide into the canister from the small end of the cone.

After the canister is secured about the wrapped catalyst member, it is attached to an exhaust pipe connected to the engine exhaust outlet or to an engine exhaust manifold outlet.

The canister is typically metallic whereas the catalyst member and the mounting mat are mainly ceramic in composition. Accordingly, as the exhaust gases heat the apparatus, the canister experiences greater thermal expansion than the catalyst member and the ceramic fiber fabric mat, and the mounting pressure holding the catalyst member in place is reduced.

While the ceramic fiber fabrics of the present invention are resilient and maintain their resiliency with aging, they may not be able to maintain a constant pressure on the catalyst member as the canister size changes with temperature for all canisters. Since lower mounting pressure can leave the catalyst member vulnerable to vibrational damage, it may be advantageous to supplement the ceramic mat with a metal wire mesh disposed between the ceramic mat and the canister. A wire mesh about the wrapped catalyst member in the canister serves to ameliorate the difference in thermal expansion between the metallic canister and the ceramic components therein and thus tends to maintain the mounting pressure on the catalyst member as the temperature of the apparatus rises. A wire mesh useful in this aspect of the invention is formed from Inconel™ alloy wire having a diameter of 0.1 millimeters (mm) and a weave period (the length from one peak in a sinusoidally configured woven wire to the next peak) of 3.18 mm. The mounting material and method described above can be used to mount single catalyst members for use solely to treat noxious exhaust gases from small engines, as well as for multiple catalyst members for use in a staged flame arrestor in accordance with the present invention.

A staged catalytic flame arrestor in accordance with one embodiment of the present invention is shown schematically in Figures 4 and 4A. The first stage 10 of the flame arrestor comprises a canister 15 mounted on the end of an exhaust pipe 12 which collects exhaust gas flowing from the exhaust outlet of a small engine (not shown), as indicated by arrow 13. Canister 15 is a clamshell-type canister which contains a catalyst member 14 mounted therein. Surrounding catalyst member 14 within canister 15 is a double layer of ceramic fiber fabric 16 which, in accordance with the present invention, comprises continuous, large diameter fibers. Surrounding ceramic fiber fabric 16 is an optional wire mesh 18 which is preferably made of Inconel™ wire. Fabric 16 and wire mesh 18 are wrapped around the sides of catalyst member 14 and are folded over ends 14a, 14b of catalyst member 14. Optional annular end rings 20 and 22 are welded to canister 15 to apply axial pressure on ends 14a and 14b of catalyst member 14 and help to secure catalyst member 14 within canister 15. In alternative embodiments, canister 15 can be configured to form end rings as an integral part of the canister. Canister 15 is situated within muffler 11.

Muffler 11 vents into pipe 32, on which is mounted a second stage 34 of the flame arrestor. The second stage comprises a canister 35 that houses a catalyst member 14' therein in the same manner that canister 15 houses catalyst member 14.

In operation, exhaust gases flow through exhaust pipe 12 into canister 15 of first stage 10. The gases flow through catalyst member 14 and enter first chamber 24 of muffler 11. As gases flow through catalyst member 14, the catalytic material therein stimulates the conversion of some of the hydrocarbons and carbon monoxide in the exhaust gas to innocuous substances, e.g., carbon dioxide and water. The gases then flow through conduit 26 to second chamber 28 and then to third chamber 30. Gases are vented from muffler 11 through pipe 32. The flow path of gas through muffler 11 attenuates the pressure pulses created by the engine, thus reducing the noise output associated with engine operation. In addition, muffler 11 and pipe 32 act as cooling means that dissipate some of the heat produced by the oxidation of hydrocarbons and carbon monoxide over catalyst member 14. The cooled effluent from first stage 10 flows from pipe 32 to the subsequent second flame arrestor stage 34, where substantially all the rest of the hydrocarbons and carbon monoxide in the gas stream are converted to carbon dioxide without raising the temperature of the exhaust gas to its auto-ignition temperature. The apparatus further comprises optional air inlets 36a, 36b through which optional air pump 38 may inject air or another oxygen-containing gas into the exhaust gas stream via air injection lines 40a and 40b.

In the configuration of Figure 4, it is seen that small circumferential portions of ends or end faces 14a, 14b, i.e., of the inlet and outlet end faces 14a, 14b of catalyst member 14, are obstructed by a folded-over portion of fabric 16 and by end rings 22. In some situations, however, the configuration of the muffler can only accommodate a catalyst member of small size, so it may be desirable to assure that no part of the inlet or outlet end faces is obstructed. In any case, such obstruction reduces the effectiveness volume of the catalyst member and is to be minimized or avoided. Accordingly, it may be desired to confine the wrapped ceramic fiber fabric to the circumferential surface of the catalyst member, i.e., to confine the fabric to the gap between the catalyst member and the canister. For example, the fabric may be configured to have a width not greater than the length of the catalyst member. Figure 5 shows a ceramic fabric 16' that has been trimmed to have a width that is smaller than the length L of the catalyst member 14''. Configured in this way, the fabric 16' can be centered on catalyst member 14'' and will not fold over and obstruct either end face 14a' or 14b' of the catalyst member. Optional end rings 23a, 23b mounted on canister 15' extend across the gap between canister 15' and catalyst member 14'' to prevent fabric 16' from extending beyond the end faces 14a', 14b' and obstructing end faces 14a' and 14b'. The use of such end rings is preferred if ceramic fiber 16' extends for the entire length L of catalyst member 14''. Avoiding obstruction of the end faces of the catalyst member in these ways is especially important when the catalyst member is short relative to its diameter, i.e., when the length of the catalyst member (measured as the flow path through the catalyst member) is less than its diameter.

### Example 1

A series of catalyst members were mounted in mufflers for small engines. The catalyst members were mounted by wrapping them in ceramic fiber fabrics placing the wrapped catalyst members in clamshell-type canisters. Except for device (B) in TABLE I below, each canister had an end ring mounted therein. Each ceramic fiber fabric wrap was folded over both ends of the catalyst member, one end of which was pressed against the mounted end ring, the folded-over portion serving as a bushing between the catalyst member and the end ring. A second end ring was then pressed against the opposite end of the catalyst member and was welded in place to secure the catalyst member in the clamshell under an axial pressure. Four prior art small diameter, short fiber, felt-type ceramic fabric materials were employed; these are designated "F", "D" and "D-S", as well as a ceramic fabric in accordance with the present invention identified as NEXTEL™ 440. In each case the clamshell-type canister was welded closed and imposed a pressure of 2.1 kg/cm² on the ceramic fiber fabric and the enclosed catalyst member, which compressed the fabric to a gap bulk density of 1.92 g/cm³. Each clamshell-type canister was configured to define an exhaust gas inlet and an outlet so that exhaust gas could be flowed into the canister, through the catalyst member and out from the canister. Each canister was mounted within a muffler as shown in Figure 4 on a Husqvarna model 242 chain saw engine. The catalyst members in devices (A), (B) and (C) were mounted in the canisters without end rings; the other devices included end rings to mount the catalyst members therein. The engine was run continuously and the durability of each ceramic fiber fabric was noted. The materials tested and the corresponding results are indicated in the following TABLE I.

**TABLE I**

| DEVICE | FABRIC⁽¹⁾ | DURABILITY |
|---|---|---|
| (A) | "F" | 30 minutes or less |
| (B) | 1.27 cm (0.5 inch) thick "D" | 10 minutes or less |
| (C) | 0.63 cm (0.25 inch) thick "D" | 0.4 hour |
| (D) | 1.27 cm (0.5 inch) thick "D" | 5 hours |
| (E) | 0.63 cm (0.25 inch) thick "D-S" 128 kg/m³ (8 lbs/ft³) density | 0.5 hour |
| (F) | 1.27 cm (0.5 inch) thick "D-S" 128 kg/m³ (8 lbs/ft³) density | 1.5 hours |
| (G) | NEXTEL™ 440 cloth (two layers, total 3.6 mm (0.14 inch) thick) | 19 hours ⁽²⁾ |
| (H) | NEXTEL™ 440 cloth (two layers, total 3.6 mm (0.14 inch) thick) | 89 hours ⁽²⁾ |

| | | |
|---|---|---|
| ⁽¹⁾ Where available, the thickness and/or density of the fabric prior to compression is indicated. | | |
| ⁽²⁾ Failure was due to failure of a weld seam, not due to ceramic fiber fabric failure. | | |

For the NEXTEL™ 400 fabric-containing devices (G) and (H), the welding on the canister failed before the ceramic fiber fabric failed. For the other materials, the converters failed because of gas erosion on the mat materials or because the catalyst member became loose due to mechanical vibration. The data of TABLE IV clearly show that continuous, large diameter, ceramic fiber fabric under a compression of over 2.1 kg/cm² is vastly more durable than other commercially available ceramic fiber fabrics of short fiber length and small diameter.

### Example 2

An exhaust treatment apparatus prepared as described in Example 1 using two layers of a NEXTEL™ 440 ceramic fiber fabric mounting material was tested by running an associated engine on a long-term basis and observing the durability of the mounting material. After 400 hours of service, the mounting material was still effectively retaining the catalyst member in the muffler canister.

### Example 3

### Heat Cycle Vibration Test

Operating conditions for a catalytic converter used on a two-stroke engine can be simulated for test purposes by flowing hot gases from a propane burner or engine exhaust through a canister within which a catalyst member is mounted using a ceramic fiber fabric mat. The canister is attached to a vibrator for the duration of the test and is wrapped in insulating material to inhibit heat loss. Canisters comprising prior art intumescent ceramic fabric mounting mats to hold the catalyst members last ten hours or less in such a test when the gas inlet temperature exceeds about 1050°C or when the skin temperature of the canister exceeds 650°C. One prior art reference reported that a canister survived 100 hours with vibrational acceleration of 40 G's and an inlet temperature of 850°C. One hundred hours is considered to indicate acceptable durability.

A catalyst member measuring 55 millimeters ("mm") in diameter and 40 mm in length was mounted in a canister using a ceramic fiber fabric in accordance with the present invention and was subjected to a heat cycle vibration test. The test canister was tested under 70 G acceleration, 150 Hz vibrations and with an inlet gas temperature that cycled from 200°C to 1050°C and back over ten-minute intervals for a period of 100 hours. At the end of 100 hours, the test canister was intact and passed the test. Failure would have been indicated by deterioration of the ceramic fiber fabric, structural damage to the catalyst member that impaired conversion performance and/or dislocation of the catalyst member in the canister. The skin temperature of the canister was about 800°C throughout most of the test.

The test results show that catalyst members mounted using ceramic fiber fabrics in accordance with the present invention provide suitable durability under conditions that are more severe than prior art materials.

## Claims

1. An exhaust treatment apparatus for abating noxious components of the exhaust gas of an internal combustion engine, the apparatus comprising a catalyst member secured in a canister through which the exhaust gas flows, the catalyst member comprising a catalytic material effective for the conversion of at least some of the noxious components to innocuous substances, the apparatus further comprising a ceramic fiber fabric disposed in a gap between the catalyst member and the canister for mounting the catalyst member in the canister, **characterised in that** the ceramic fiber fabric comprises fibers having an average length of greater than 25.4 cm (10 inches).

2. The apparatus of claim 1 wherein the ceramic fiber fabric comprises fibers having an average length of at least about 1.5 meters.

3. The apparatus of claim 1 wherein the ceramic fiber fabric comprises fibers having an average length of at least about 3 meters.

4. The apparatus of claim 1 wherein the ceramic fiber fabric comprises effectively continuous fibers.

5. The apparatus of claim 1 wherein the ceramic fiber fabric is configured to have a width not greater than the length of the catalyst member, and wherein the fabric has woven edges.

6. The apparatus of claim 1 wherein the ceramic fiber fabric is substantially free of intumescent fibers.

7. The apparatus of claim 5 further comprising a wire mesh surrounding the catalyst member in the canister.

8. The apparatus of claim 1 wherein the gap is less than about 2.5mm (0.1 inch).

9. The apparatus of claim 8 wherein the gap has a width of about 1.27 to 1.52mm (0.05 to 0.06 inch).

10. The apparatus of claim 8 wherein the gap has a width of less than 1.27mm (0.05 inch).

11. The apparatus of claim 1 wherein the catalyst member has a circumferential surface and wherein the ceramic fiber fabric is confined to the circumferential surface.

12. The apparatus of claim 11 wherein the catalyst member has an inlet end face and an outlet end face and the apparatus further comprises end rings dimensioned and configured to confine the ceramic fiber fabric within the gap without obstructing the end faces of the catalyst member.

13. The apparatus of claim 1 wherein the ceramic fiber fabric has a weight of about 0.15g/cm² (1 gram per square inch).

14. The apparatus of claim 1 or claim 6 wherein the ceramic fiber fabric comprises a woven fabric.

15. The apparatus of claim 14 wherein the ceramic fiber fabric has a density of at least about 0.1 grams per cubic centimeter.

16. The apparatus of claim 15 wherein the ceramic fiber fabric has a density of at least about 0.5 grams per cubic centimeter.

17. The apparatus of claim 16 wherein the ceramic fiber fabric has a density of about 0.76 grams per cubic centimeter.

18. The apparatus of claim 1 wherein the catalyst member has end faces and a circumferential surface, said ceramic fiber fabric being confined to the circumferential surface of the catalyst member, and wherein said apparatus further comprises an end ring that extends across the gap between the canister and the catalyst member without obstructing an end face of the catalyst member.

19. A method for assembling a gas treatment apparatus, comprising:
wrapping a catalyst member in a ceramic fiber fabric comprising fibers having an average length of greater than 25.4 cm (10 inches), the catalyst member comprising a catalytic material effective for the conversion of components of a gas stream and being dimensioned and configured to have two end faces, a circumferential surface, and a plurality of gas flow passages extending therethrough from one end face to the other;
surrounding the wrapped catalyst member with at least one shell having edges that can be joined together; and
applying a predetermined assembly force on the at least one shell and maintaining the predetermined assembly force while securing the shell edges together to form a canister about the catalyst member and to define a gap between the canister and the catalyst member wherein the ceramic fiber fabric is disposed.

20. The method of claim 19 wherein the gas flow passages of the catalyst member are defined by sets of parallel cell walls that are angled relative to each other, and comprising applying the assembly force at a non-zero angle relative to each set of cell walls.

21. The method of claim 20 wherein the sets of cell walls are mutually perpendicular to each other, and comprising applying the assembly force at an oblique angle relative to the cell walls.

22. The method of claim 21 comprising applying the assembly force at an angle of 45 degrees relative to the cell walls.

23. The method of claim 19 comprising defining a gap having a width of less than 2.54 mm (0.1 inch).

24. The method of claim 23 comprising defining a gap having a width of from about 1.27 to 1.52mm (0.05 to 0.06 inch).

25. The method of claim 23 wherein the gap has a width of less than 1.27mm (0.05 inch).

26. The method of claim 19 comprising confining the ceramic fiber fabric to the circumferential surface of the catalyst member.

27. The apparatus of any of claims 6 to 8, wherein the ceramic fiber fabric comprises a woven fabric.

28. The apparatus of claim 27 wherein the ceramic fiber fabric is substantially free of intumescent fibers.

## Patentansprüche

1. Abgasbehandlungsvorrichtung zum Beseitigen von schädlichen Bestandteilen des Abgases eines Verbrennungsmotors, wobei die Vorrichtung ein Katalysatorelement umfasst, das in einem Behälter befestigt ist, durch den das Abgas strömt, das Katalysatorelement ein katalytisches Material umfasst, das die Umwandlung wenigstens einiger der schädlichen Bestandteile in unschädliche Substanzen bewirkt, und die Vorrichtung des Weiteren ein Keramikfaser-Textilerzeugnis umfasst, das in einem Zwischenraum zwischen dem Katalysatorelement und dem Behälter zum Anbringen des Katalysatorelementes in dem Behälter angeordnet ist, **dadurch gekennzeichnet, dass** das Keramikfaser-Textilerzeugnis Fasem mit einer durchschnittlichen Länge von mehr als 25,4 cm (10 inch) umfasst.

2. Vorrichtung nach Anspruch 1, wobei das Keramikfaser-Textilerzeugnis Fasern mit einer durchschnittlichen Länge von wenigstens ungefähr 1,5 m umfasst.

3. Vorrichtung nach Anspruch 1, wobei das Keramikfaser-Textilerzeugnis Fasern mit einer durchschnittlichen Länge von wenigstens ungefähr 3 m umfasst.

4. Vorrichtung nach Anspruch 1, wobei das Keramikfaser-Textilerzeugnis effektiv endlose Fasem umfasst.

5. Vorrichtung nach Anspruch 1, wobei das Keramikfaser-Textilerzeugnis so ausgeführt ist, dass es eine Breite hat, die nicht größer ist als die Länge des Katalysatorelementes, und wobei das Textilerzeugnis gewebte Kanten aufweist.

6. Vorrichtung nach Anspruch 1, wobei das Keramikfaser-Textllerzeugnis im Wesentlichen frei von intumeszenten Fasern ist.

7. Vorrichtung nach Anspruch 5, die des Weiteren ein Drahtnetz umfasst, dass das Katalysatorelement in dem Behälter umgibt.

8. Vorrichtung nach Anspruch 1, wobei der Zwischenraum weniger als ungefähr 2,5 mm (0,1 Inch) beträgt.

9. Vorrichtung nach Anspruch 8, wobei der Zwischenraum eine Breite von ungefähr 1,27 bis 1,52 mm (0,05 bis 0,06 Inch) hat.

10. Vorrichtung nach Anspruch 8, wobei der Zwischenraum eine Breite von weniger als 1,27 mm (0,05 Inch) hat.

11. Vorrichtung nach Anspruch 1, wobei das Katalysatorelement eine Umfangsfläche hat und wobei das Keramikfaser-Textilerzeugnis auf die Umfangsfläche beschränkt ist.

12. Vorrichtung nach Anspruch 11, wobei das Katalysatorelement eine Einlass-Endfläche und eine Auslass-Endfläche hat und die Vorrichtung des Weiteren Endringe umfasst, die so bemessen und geformt sind, dass sie das Keramikfaser-Textilerzeugnis auf den Zwischenraum beschränken, ohne die Endflächen des Katalysatorelementes zu blockieren.

13. Vorrichtung nach Anspruch 1, wobei das Keramikfaser-Textilerzeugnis ein Gewicht von ungefähr 0,15 g/cm² (1 Gramm pro Quadratinch) hat.

14. Vorrichtung nach Anspruch 1 oder Anspruch 6, wobei das Keramikfaser-Textilerzeugnis ein Gewebe umfasst.

15. Vorrichtung nach Anspruch 14, wobei das Keramikfaser-Textilerzeugnis eine Dichte von wenigstens ungefähr 0,1 Gramm pro Kubikzentimeter hat.

16. Vorrichtung nach Anspruch 15, wobei das Keramikfaser-Textilerzeugnis eine Dichte von wenigstens ungefähr 0,5 Gramm pro Kubikzentimeter hat.

17. Vorrichtung nach Anspruch 16, wobei das Keramikfaser-Textilerzeugnis eine Dichte von ungefähr 0,76 Gramm pro Kubikzentimeter hat.

18. Vorrichtung nach Anspruch 1, wobei das Katalysatorelement Endflächen und eine Umfangsfläche hat und das Keramikfaser-Textilerzeugnis auf die Umfangsfläche des Katalysatorelementes beschränkt ist, und wobei die Vorrichtung des Weiteren einen Endring umfasst, der sich über den Zwischenraum zwischen dem Behälter und dem Katalysatorelement erstreckt, ohne eine Endfläche des Katalysatorelementes zu blockieren.

19. Verfahren zum Zusammensetzen einer Gasbehandlungsvorrichtung, das umfasst:
Einwickeln eines Katalysatorelementes in ein Keramikfaser-Textilerzeugnis, das Fasern umfasst, die eine durchschnittliche Länge von mehr als 25,4 cm (10 Inch) haben, wobei das Katalysatorelement ein katalytisches Material umfasst, das die Umwandlung von Bestandteilen eines Gasstroms bewirkt, und so bemessen und geformt ist, dass es zwei Endflächen, eine Umfangsfläche und eine Vielzahl von Gasstromdurchlassen aufweist, die sich von einer Endfläche zur anderen durch es hindurch erstrecken;
Umschließen des eingewickelten Katalysatorelementes mit wenigstens einer Ummantelung, die Kanten aufweist, die miteinander verbunden werden können; und
Ausüben einer vorgegebenen Zusammensetzkraft auf die wenigstens eine Ummantelung und Aufrechterhalten der vorgegebenen Zusammensetzkraft beim Befestigen der Ummantelungskanten aneinander, um einen Behälter um das Katalysatorelement herum herzustellen und einen Zwischenraum zwischen dem Behälter und dem Katalysatorelement auszubilden, in dem das Keramikfaser-Textilerzeugnis angeordnet wird.

20. Verfahren nach Anspruch 19, wobei die Gasstromdurchlasse des Katalysatorelementes durch Gruppen von parallelen Zellwänden gebildet werden, die zueinander angewinkelt sind, und das das Ausüben der Zusammensetzkraft in einem anderen Winkel als 0 in Bezug auf jede Gruppe von Zellwänden umfasst.

21. Verfahren nach Anspruch 20, wobei die Gruppen von Zellwänden senkrecht zueinander sind und das das Ausüben der Zusammensetzkraft in einem schiefen Winkel in Bezug auf die Zellwände umfasst.

22. Verfahren nach Anspruch 21, das das Ausüben der Zusammensetzkraft in einem Winkel von 45° in Bezug auf die Zellwände umfasst.

23. Verfahren nach Anspruch 19, das das Ausbilden eines Zwischenraums mit einer Breite von weniger als 2,54 mm (0,1 Inch) umfasst.

24. Verfahren nach Anspruch 23, das das Ausbilden eines Zwischenraums mit einer Breite von ungefähr 1,27 bis 1,52 mm (0,05 bis 0,06 Inch) umfasst.

25. Verfahren nach Anspruch 23, wobei der Zwischenraum eine Breite von weniger als 1,27 mm (0,05 Inch) hat.

26. Verfahren nach Anspruch 19, das das Beschränken des Keramikfaser-Textilerzeugnisses auf die Umfangsfläche des Katalysatorelementes umfasst.

27. Vorrichtung nach einem der Ansprüche 6 bis 8, wobei das Keramikfaser-Textilerzeugnis ein Gewebe umfasst.

28. Vorrichtung nach Anspruch 27, wobei das Keramikfaser-Textilerzeugnis im Wesentlichen frei von intumeszenten Fasem ist.

## Revendications

1. Appareil de traitement des gaz d'échappement pour réduire les composants nocifs des gaz d'échappement d'un moteur à combustion interne, l'appareil comprenant un élément catalyseur attaché dans un filtre à travers lequel les gaz d'échappement circulent, l'élément catalyseur comprenant un matériau catalytique effectif pour la conversion d'au moins certains des composants nocifs en substances non-nocives, l'appareil comprenant, en outre, une structure en fibre céramique disposée dans un espace entre l'élément catalyseur et le filtre pour monter l'élément catalyseur dans le filtre, **caractérisé en ce que** la structure en fibre céramique comprend des fibres ayant une longueur moyenne plus grande que 25,4 cm (10 pouces).

2. Appareil selon la revendication 1, dans lequel la structure en fibre céramique comprend des fibres ayant une longueur moyenne d'au moins environ 1,5 mètres.

3. Appareil selon la revendication 1, dans lequel la structure en fibre céramique comprend des fibres ayant une longueur moyenne d'au moins environ 3 mètres.

4. Appareil selon la revendication 1, dans lequel la structure en fibre céramique comprend effectivement des fibres continues.

5. Appareil selon la revendication 1, dans lequel la structure en fibre céramique est configurée pour avoir une largeur pas plus grande que la longueur de l'élément catalyseur et dans lequel la structure a des bords tissés.

6. Appareil selon la revendication 1, dans lequel la structure en fibre céramique est substantiellement libre de fibres intumescentes.

7. Appareil selon la revendication 5, comprenant, en outre, un maillage entourant l'élément catalyseur dans le filtre.

8. Appareil selon la revendication 1, dans lequel l'espace fait moins qu'environ 2,5 mm (0,1 pouce).

9. Appareil selon la revendication 8, dans lequel l'espace a une largeur d'environ 1,27 à 1,52 mm (0,05 à 0,06 pouce).

10. Appareil selon la revendication 8, dans lequel l'espace a une largeur de moins que 1,27 mm (0,05 pouce).

11. Appareil selon la revendication 1, dans lequel l'élément catalyseur a une surface circonférentielle et dans lequel la structure en fibre céramique est limitée à la surface circonférentielle.

12. Appareil selon la revendication 11, dans lequel l'élément catalyseur a une face d'extrémité d'admission et une face d'extrémité d'échappement et l'appareil comprend, en outre, des anneaux d'extrémité dimensionnés et configurés pour limiter la structure en fibre céramique à l'intérieur de l'espace sans obstruer les faces d'extrémité de l'élément catalyseur.

13. Appareil selon la revendication 1, dans lequel la structure en fibre céramique a un poids d'environ 0,15 g/cm² (1 gramme par pouce carré).

14. Appareil selon la revendication 1 ou la revendication 6, dans lequel la structure en fibre céramique comprend une structure tissée.

15. Appareil selon la revendication 14, dans lequel la structure en fibre céramique a une densité d'au moins environ 0,1 gramme par centimètre cube.

16. Appareil selon la revendication 15, dans lequel la structure en fibre céramique a une densité d'au moins environ 0,5 gramme par centimètre cube.

17. Appareil selon la revendication 16, dans lequel la structure en fibre céramique a une densité d'au moins environ 0,76 gramme par centimètre cube.

18. Appareil selon la revendication 1, dans lequel l'élément catalyseur a des faces d'extrémité et une surface circonférentielle, ladite structure en fibre céramique étant confinée à la surface circonférentielle de l'élément catalyseur, et dans lequel ledit appareil comprend, en outre, un anneau d'extrémité qui s'étend d'un côté à l'autre de l'espace entre le filtre et l'élément catalyseur sans obstruer une face d'extrémité de l'élément catalyseur.

19. Procédé pour assembler un appareil de traitement de gaz, comprenant les étapes consistant à :
envelopper un élément catalyseur dans une structure en fibre céramique comprenant des fibres ayant une longueur moyenne plus grande que 25,4 cm (10 pouces), l'élément catalyseur comprenant un matériel catalytique efficace pour la conversion de composants d'un jet de gaz et étant dimensionné et configuré pour avoir deux faces d'extrémité, une surface circonférentielle et une pluralité de passages d'écoulement de gaz s'étendant à travers celui-là depuis une face d'extrémité jusqu'à l'autre ;
entourer l'élément catalyseur enveloppé avec au moins une coque ayant des bords qui peuvent être réunis ensemble ; et
appliquer une force d'assemblage prédéterminée sur au moins une coque et maintenir la force d'assemblage prédéterminée tout en attachant ensemble les bords de coque pour former un filtre dans l'élément catalyseur et pour définir un espace entre le filtre et l'élément catalyseur dans lequel la structure en fibre céramique est disposée.

20. Procédé selon la revendication 19, dans lequel les passages d'écoulement de gaz sont définis par des ensembles de parois de cellule parallèles qui sont présentées sous un certain angle les unes par rapport aux autres et comprenant le fait d'appliquer la force d'assemblage selon un angle non nul par rapport à chaque ensemble de parois de cellule.

21. Procédé selon la revendication 20, dans lequel les ensembles de parois de cellule sont mutuellement perpendiculaires les unes par rapport aux autres, et comprenant le fait d'appliquer la force d'assemblage selon un angle oblique par rapport aux parois de cellule.

22. Procédé selon la revendication 21, comprenant le fait d'appliquer la force d'assemblage selon un angle de 45 degrés par rapport aux parois de cellule.

23. Procédé selon la revendication 19, comprenant le fait de définir un espace ayant une largeur de moins que 2,54 mm (0,1 pouce).

24. Procédé selon la revendication 23, comprenant le fait de définir un espace ayant une largeur allant d'environ 1,27 à 1,52 mm (0,05 à 0,06 pouce).

25. Procédé selon la revendication 23, dans lequel l'espace a une largeur de moins que 1,27 mm (0,05 pouce).

26. Procédé selon la revendication 19, comprenant le fait de confiner la structure en fibre céramique à la surface circonférentielle de l'élément catalyseur.

27. Appareil selon l'une quelconque des revendications 6 à 8, dans lequel la structure en fibre céramique comprend une structure tissée.

28. Appareil selon la revendication 27, dans lequel la structure en fibre céramique est substantiellement libre de fibres intumescentes.
